Europäisches Patentamt

European Patent Office

Office européen des brevets

(19)

(11) **EP 0 604 302 B1**

(12) **FASCICULE DE BREVET EUROPEEN**

(45) Date de publication et mention
de la délivrance du brevet:
**16.09.1998 Bulletin 1998/38**

(51) Int Cl.6: **G01N 23/04**

(21) Numéro de dépôt: **93403113.9**

(22) Date de dépôt: **21.12.1993**

(54) **Procédé et dispositif d'analyse, par radiograhpie, d'objects en défilement**

Verfahren und Vorrichtung zur Analyse von sich bewegenden Objekten mittels Radiographie

Method and apparatus for analysis of moving objects by radiography

(84) Etats contractants désignés:
**BE DE GB IT NL**

(30) Priorité: **23.12.1992 FR 9215611**

(43) Date de publication de la demande:
**29.06.1994 Bulletin 1994/26**

(73) Titulaire: **COMMISSARIAT A L'ENERGIE ATOMIQUE**
**75015 Paris (FR)**

(72) Inventeur: **Favier, Charles**
**F-69005 Lyon (FR)**

(74) Mandataire: **Dubois-Chabert, Guy et al**
**c/o BREVATOME**
**25, rue de Ponthieu**
**75008 Paris (FR)**

(56) Documents cités:
**EP-A- 0 074 877         FR-A- 2 384 245**
**US-A- 4 845 769        US-A- 4 989 225**
**US-A- 5 119 408**

• **TOSHIBA REVIEW no. 156 , 1986 pages 15 - 20 Y. TANIMOTO ET AL. 'X-RAY NONDESTRUCTIVE INSPECTION USING DIGITAL IMAGE PROCESSING'**
• **MED.PHYS. vol. 17, no. 5 , 1990 pages 876 - 886 D.W.HOLDSWORTH ET AL. 'A TIME-DELAY INTEGRATION CHARGE-COUPLED DEVICE CAMERA FOR SLOT-SCANNED DIGITAL RADIOGRAPHY'**

## Description

La présente invention concerne un procédé et un dispositif d'analyse, par radiographie, d'objets en défilement.

Elle trouve des applications dans le domaine du contrôle non destructif par radiographie, en particulier dans l'industrie alimentaire.

L'acquisition d'une image radiographique nécessite un temps de pose minimum pour intégrer, pour chaque pixel, une information statistiquement significative.

En effet, les photons X sont émis selon une loi poissonnienne.

On sait alors que, si l'on compte en moyenne N photons sur un pixel pendant le temps de mesure, on aura sur cette mesure du nombre N une fluctuation statistique dont l'écart type est égal à la racine carrée de N.

La précision relative de la mesure est d'autant meilleure que N est grand.

Ce nombre N dépend essentiellement de quatre paramètres :

- la puissance du générateur de rayonnement X utilisé,
- la distance à laquelle on place le détecteur par rapport à ce générateur de rayonnement X (le nombre de photons varie proportionnellement à l'inverse du carré de cette distance),
- le temps de pose T (si l'on reçoit, par pixel, M photons par unité de temps, on aura, pendant le temps de pose T, un nombre M de photons égal à MxT),
- l'efficacité du détecteur utilisé qui détermine le nombre N de photons détectés en fonction du nombre de photons disponibles pour le pixel considéré.

On connaît deux techniques pour analyser une série de pièces.

Selon une première technique connue, on utilise, pour chaque pièce, un temps de pose T et, de ce fait, on perd, pour l'acquisition, le temps nécessaire au changement de pièce.

Selon une deuxième technique connue, on fait l'acquisition des informations concernant une pièce pendant le déplacement en translation de celle-ci.

Pour ce faire, une première méthode connue consiste à utiliser une barrette de détecteurs élémentaires et à analyser l'image de la pièce ligne par ligne.

Une deuxième méthode connue, pour l'acquisition des informations concernant la pièce pendant son déplacement, consiste à utiliser un dispositif CCD dont les lignes se décalent à la cadence correspondant à la vitesse de déplacement de la pièce, permettant ainsi l'intégration des informations reçues sur plusieurs lignes simultanément.

Cette deuxième méthode connue est appelée "intégration avec décalage par retard" (ou TDI dans les publications en langue anglaise, pour "Time Delay and Integration").

Au sujet de ces deux méthodes connues, on consultera les documents suivants :

(1) Communication présentée par Ch. Favier, G. Thomas, Ch. Brebant et R. Mogavero au Premier colloque image, Traitement, Synthèse, Technologie et Applications, Biarritz (France), "Système d'analyse automatique de défauts en imagerie X",

(2) Article de B. Munier et D. King, publié dans Vision and Voice Magazine, vol.3, n°2, 1989, p.133 à 137, "Solid-state linear X-ray detectors, High-resolution industrial radiology made simple,

(3) Article de D.W. Holdsworth et al., publié dans Med.Phys. 17(5), Sept/Oct 1990, p.876 à 886, "A time-delay integration charge-coupled device camera for slot-scanned digital radiography",

(4) Article de J. de Groot et al., publié dans SPIE vol.591 Solid state imagers and their applications (1985), p.24 à 30, "X-ray image sensor based on an optical TDI-CCD imager".

Ces deux méthodes connues sont présentées de façon un peu plus détaillée ci-dessous et leurs avantages et inconvénients respectifs sont discutés.

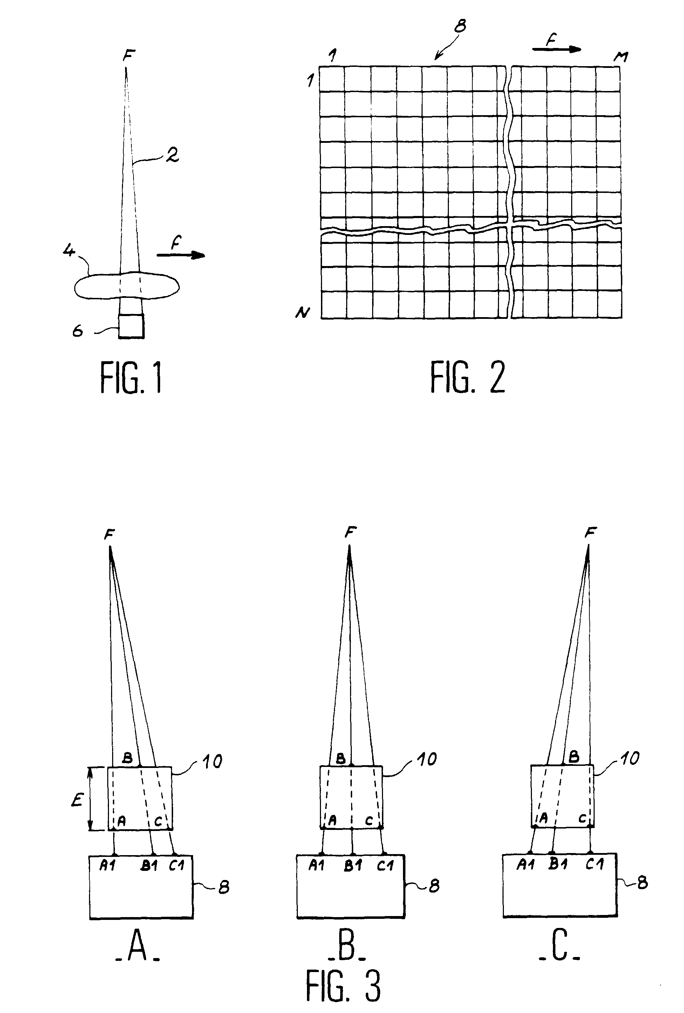

Pour la première méthode connue, on se réfère à la figure 1 sur laquelle on voit un faisceau 2 de rayonnement X qui est issu du foyer F d'un générateur de rayonnement X (non représenté).

Un objet 4 que l'on veut analyser se déplace en translation suivant la flèche f entre le générateur de rayonnement X et une barrette 6 de détecteurs élémentaires (que l'on voit en vue de dessus sur la figure 1).

Cette barrette 6 permet d'analyser l'objet 4 ligne par ligne.

Si la ligne analysée est lue à des intervalles de temps T et si, pendant ce temps T, l'objet 4 s'est déplacé d'une distance D, on acquiert une image qui a Nc colonnes, si la barrette 6 a Nc points, et Nl lignes, si l'acquisition est faite pendant un temps égal à TxNl.

Pour avoir des pixels carrés, on choisit D égal à l'espacement des points de la barrette 6.

Cette première méthode connue est notamment utilisée dans les systèmes de contrôle de bagages par rayons X (systèmes Bagagix - marque déposée).

Cette première méthode connue présente un inconvénient.

En effet, dans cette première méthode, le faisceau de rayonnement X qui est disponible à la sortie du générateur est mal utilisé puisqu'on ne prend en compte qu'une ligne sur la surface maximum disponible (qui est généralement circulaire).

Ainsi, pour chaque pixel, le temps de mesure (intégration de l'information X) est égal à T, d'où une limitation de la vitesse d'analyse.

Selon la deuxième méthode connue (intégration avec décalage par retard), l'image de l'objet qui se déplace en translation suivant la flèche f (figure 2), est analysée avec un dispositif 8 de type CCD (Charge Coupled Device) qui constitue une matrice à M colonnes et à N lignes et dans lequel l'information est transmise d'une ligne à l'autre, de sorte que l'on recueille sur une colonne en sortie, à l'instant t, une information globale correspondant, sur la même colonne, à la somme des informations reçues

- de l'instant t-T à l'instant t, sur la dernière colonne (colonne M),
- de l'instant t-2T à l'instant t-T, sur la colonne M-1,
- de l'instant t-3T à l'instant t-2T, sur la colonne M- 2, ...,
- de l'instant t-M.t à l'instant t-(M-1).T, sur la colonne 1.

Chaque point élémentaire de l'objet est ainsi mesuré (intégration de l'information X) pendant un temps MxT.

Cette deuxième méthode connue présente également un inconvénient.

En effet, comme on le voit sur la figure 3, si l'objet 10 que l'on analyse a une épaisseur donnée E, la projection d'un point de l'objet 10 ne se déplace pas à la même vitesse selon que ce point est près ou loin du foyer F du générateur de rayonnement X.

Ceci est illustré par les parties A, B et C de la figure 3 où l'on voit l'objet 10 ainsi que des points A, B et C de cet objet et les projections respectives A1, B1 et C1 de ces points A, B et C, pour trois positions différentes correspondant respectivement aux parties A, B et C de la figure 3.

Si l'on a réglé la période T d'analyse pour un plan donné de l'objet 10 (c'est-à-dire pour une distance donnée entre ce plan et le détecteur 8), on a pour les points des autres plans un flou qui est d'autant plus grand que ces autres plans sont éloignés du plan de mise au point.

Ceci est d'autant plus marqué que le dispositif CCD utilisé comporte de nombreuses colonnes et qu'on peut ainsi utiliser un angle plus ouvert de faisceau de rayonnement X.

On cherche un compromis entre le nombre de colonnes et l'épaisseur de l'objet, pour un flou donné.

Des dispositifs CCD spécialement consacrés à ce type d'application sont fabriqués et commercialisés par exemple par la société DALSA Inc. au Canada.

Ces dispositifs ont beaucoup plus de lignes que de colonnes et ne couvrent donc qu'une part angulaire relativement faible du générateur de rayonnement X.

On se reportera à la documentation de la société DALSA Inc., documentation dans laquelle on trouve par exemple les dispositifs commercialisés sous la marque Quietsensor avec les références IL-E1-0512, IL-E1-1024, IL-E1-2048, IT-E1-1536, IT-E1- 2048 et IT-F2-2048.

La présente invention résout le problème du contrôle radiographique d'objets en défilement, en utilisant au mieux l'angle de sortie du générateur de rayonnement X.

Pour résoudre ce problème, les objets à analyser sont déplacés en les faisant tourner autour du foyer du générateur de rayonnement X.

Ainsi, on ne modifie pas les dispositions relatives des points constituant chaque objet analysé.

Les projections de ces points sur le détecteur ne sont pas déformées.

Il est alors possible d'analyser cet objet avec un détecteur de type "intégration à décalage" qui est comme les CCD mais circulaire et par exemple constitué

- de plusieurs barrettes linéaires disposées de façon circulaire,
- ou de plusieurs dispositifs CCD élémentaires de faible largeur (en cherchant comme précédemment un compromis entre l'épaisseur de l'objet, le flou admissible et la largeur d'un dispositif CCD élémentaire).

Il est également possible d'analyser l'objet avec un détecteur spécial circulaire.

Cependant, de tels moyens seraient trop onéreux.

C'est pourquoi, le procédé d'analyse radiographique d'objets en défilement visé par la présente invention est conforme à la revendication 1.

Le document US-A-4 989 225 décrit un procédé et un dispositif conformes aux préambules des revendications 1 et 2.

La présente invention concerne également un dispositif d'analyse radiographique d'objets en défilement, ce dispositif étant conforme à la revendication 2.

Selon un premier mode de réalisation particulier du dispositif objet de l'invention, les moyens de détection comprennent en outre des moyens de conversion de ce rayonnement X ayant traversé l'objet en une image du spectre visible, et le détecteur est un détecteur matriciel sur lequel est projeté cette image visible de l'objet et dont le pas est ajusté proportionnellement à $1/\cos^2\theta$, où $\theta$ représente l'angle d'examen de l'objet.

Selon un deuxième mode de réalisation particulier du dispositif objet de l'invention, les moyens de détection comprennent en outre des moyens de conversion de ce rayonnement X ayant traversé l'objet en une image du spectre visible, et le détecteur est un détecteur vidicon qui est muni d'une mémoire d'intégration et sur lequel est projetée cette image visible de l'objet,

la vitesse de balayage des lignes ou des colonnes du détecteur vidicon est modulée proportionnellement à $1/\cos^2\theta$, où $\theta$ représente l'angle d'examen de l'objet, et les images successivement formées sont intégrées dans la mémoire, cette dernière étant explorée en mode défilement.

La présente invention sera mieux comprise à la lecture de la description d'exemples de réalisation donnés ci-après, à titre purement indicatif et nullement limitatif, en faisant référence aux dessins annexés sur lesquels :

- la figure 1, déjà décrite, illustre schématiquement l'analyse radiographique d'objets au moyen d'une barrette de détecteurs élémentaires,
- la figure 2, déjà décrite, illustre schématiquement l'analyse d'objets au moyen d'un détecteur matriciel par une méthode connue d'intégration avec décalage par retard,
- la figure 3, déjà décrite, illustre schématiquement le fait que la projection d'un point de l'objet sur le détecteur de la figure 2 ne se déplace pas à la même vitesse selon que ce point est près ou loin du foyer du générateur de rayonnement X utilisé,
- la figure 4 illustre schématiquement le principe du procédé objet de la présente invention,
- la figure 5 est une vue schématique d'un mode de réalisation particulier du dispositif objet de la présente invention,
- la figure 6 illustre schématiquement et partiellement un autre dispositif conforme à l'invention,
- la figure 7 est une vue schématique et partielle d'un détecteur matriciel à semi-conducteur de type CCD, et
- la figure 8 est une vue schématique d'un dispositif conforme à l'invention, permettant de contrôler des récipients.

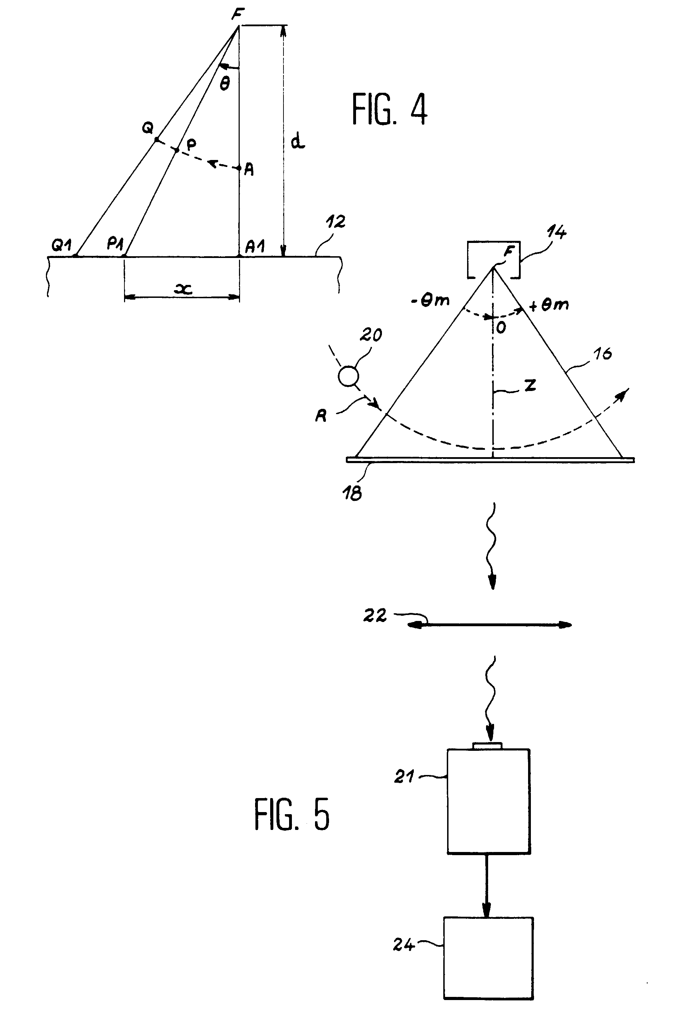

Un procédé conforme à l'invention utilise un détecteur de type intégration avec décalage, dans lequel le pas de décalage est adapté pour suivre constamment, avec la bonne phase, la projection d'un objet à analyser qui se déplace en rotation autour du foyer F d'un générateur de rayonnement X (figure 4).

Un point de l'objet occupe successivement des positions A, P et Q comme on le voit sur la figure 4.

Les projections des points A, P et Q sur le détecteur 12 de type intégration avec décalage, portent respectivement les références A1, P1 et Q1.

On utilise les notations suivantes :

a: vitesse angulaire de rotation de l'objet,
d: distance entre le foyer F et le détecteur 12,
$\theta$: angle sous lequel est vu le point P.

On convient que l'angle $\theta$ est nul à l'instant t=0.
Le déplacement angulaire est : $\theta = a.t$.
Le déplacement x du point projeté est tel que :

$$x = d.\mathrm{tg}\theta = d.\mathrm{tg}(a.t).$$

La vitesse V du point projeté est donc telle que :

$$V = dx/dt = a.d.(\cos^2(a.t))^{-1} = a.d.(\cos^2\theta)^{-1}.$$

Donc, en échantillonnant le détecteur (comportant M colonnes) avec des espacements proportionnels à cette vitesse V et en décalant (avec intégration) les informations d'un "cran" à chaque échantillonnage, on retrouve en sortie, après les M décalages correspondant aux M colonnes du détecteur 12, l'image des points qui viennent de sortir de la zone d'analyse.

Ceci peut être obtenu de diverses façons.

Une première façon de procéder consiste à associer, avec des retards adéquats, des barrettes de détection linéaires, qui sont correctement espacées les unes des autres.

Une deuxième façon de procéder consiste à utiliser des capteurs de type "décalage-intégration" dont le pas est ajusté proportionnellement à $1/\cos^2\theta$ pour un angle d'examen donné.

Une troisième façon de procéder consiste à utiliser un étage de conversion du rayonnement X en lumière visible puis à projeter l'image visible obtenue (éventuellement après amplification de cette image) sur un détecteur d'images visibles, de type CCD ou de type vidicon, par l'intermédiaire d'un dispositif optique approprié.

Pour la mise en oeuvre de l'invention, ce détecteur est adapté pour analyser, avec intégration et à une vitesse adaptée, les images des radiographies projetées.

Pour ce faire, on peut

- soit utiliser un détecteur matriciel CCD dont le pas est ajusté proportionnellement à $1/\cos^2\theta$
- soit utiliser un détecteur de type vidicon en modulant, proportionnellement à $1/\cos^2\theta$, la vitesse d'exploration des lignes ou des colonnes (suivant le sens de défilement choisi pour les objets) du tube vidicon et intégrer les images successives dans une mémoire vidéo cumulative, explorée en mode défilement (scroll).

Les lignes ou les colonnes (suivant le sens de défilement des objets) qui sortent de la mémoire constituent l'image finale des objets analysés.

On détaille ci-après un mode de réalisation particulier de l'invention utilisant un détecteur vidicon à balayage ajusté et intégration.

On trouve dans le commerce des ensembles comprenant un détecteur d'images de type vidicon, un convertisseur analogique- numérique et une mémoire d'intégration.

Les modifications à apporter à de tels ensembles pour les utiliser dans la présente invention sont les suivantes :

Il convient d'effectuer un décalage d'un pas (ligne ou colonne - suivant le sens de défilement choisi pour les objets) à chaque trame, pour intégrer une image défilante.

Un tel procédé est connu en lui-même (balayage en mode défilement ou "scroll").

Il suffit d'utiliser ce procédé sur la mémoire d'intégration et de recueillir comme image finale les lignes ou les colonnes (suivant le sens de défilement choisi) qui sortiront de cette mémoire d'intégration.

Il convient également d'adapter la vitesse de balayage (des lignes ou des colonnes suivant le sens de défilement choisi) à la vitesse de défilement de la projection des images radiographiques.

Cela peut être fait, par exemple, en prenant pour rampe de balayage la sortie d'un convertisseur numérique-analogique ou en utilisant la sortie d'un tel convertisseur numérique-analogique pour modifier la rampe normale de balayage.

Dans ce cas, le convertisseur numérique-analogique est piloté par une mémoire préalablement chargée à partir des calculs d'ajustement de balayage désiré ou à partir de mesures effectuées sur le dispositif d'analyse non adapté ou mal adapté.

A partir de l'image obtenue pour une barre (qui est relative à une ou plusieurs colonnes de l'image ou à une ou plusieurs lignes de l'image - suivant le sens de défilement choisi), on peut évaluer les imperfections de l'ajustement de la vitesse de balayage et faire les corrections nécessaires.

On voit sur la figure 5 un générateur 14 de rayonnement X dont le foyer porte la référence F et qui émet un faisceau de rayons X dont l'axe porte la référence Z.

L'angle d'ouverture du générateur 14, c'est-à-dire l'angle d'ouverture du faisceau 16 de rayons X, est noté $2\theta m$.

Ainsi, en comptant l'origine des angles sur l'axe Z, le faisceau de rayonnement X est compris entre $-\theta m$ et $+\theta m$.

Le dispositif conforme à l'invention, qui est schématiquement représenté sur la figure 5, comprend également un écran 18 de conversion du rayonnement X, issu du générateur, en lumière visible.

Les objets à analyser, tels que l'objet 20, sont déplacés en rotation autour du foyer F par des moyens symbolisés par la flèche courbe R.

Comme on le voit sur la figure 5, les objets traversent le faisceau de rayonnement X, entre le générateur 14 et l'écran 18.

Le dispositif de la figure 5 comprend également une caméra 21 équipée d'un tube de prise d'images de type vidicon (par exemple du genre Nocticon ou S.I.T. afin d'avoir une plus grande sensibilité).

Cette caméra 21 reçoit, par l'intermédiaire de moyens optiques 22, l'image appartenant au spectre visible qui a été formée grâce à l'écran 18.

Les signaux fournis par la caméra 21 sont envoyés à des moyens électroniques de traitement 24 qui donnent les résultats de l'analyse des objets et qui comprennent par exemple pour ce faire des moyens de visualisation (non représentés).

La caméra 21 et les moyens de traitement 24 sont adaptés de la façon indiquée plus haut et, dans ce qui suit, on revient plus en détail sur ces adaptations.

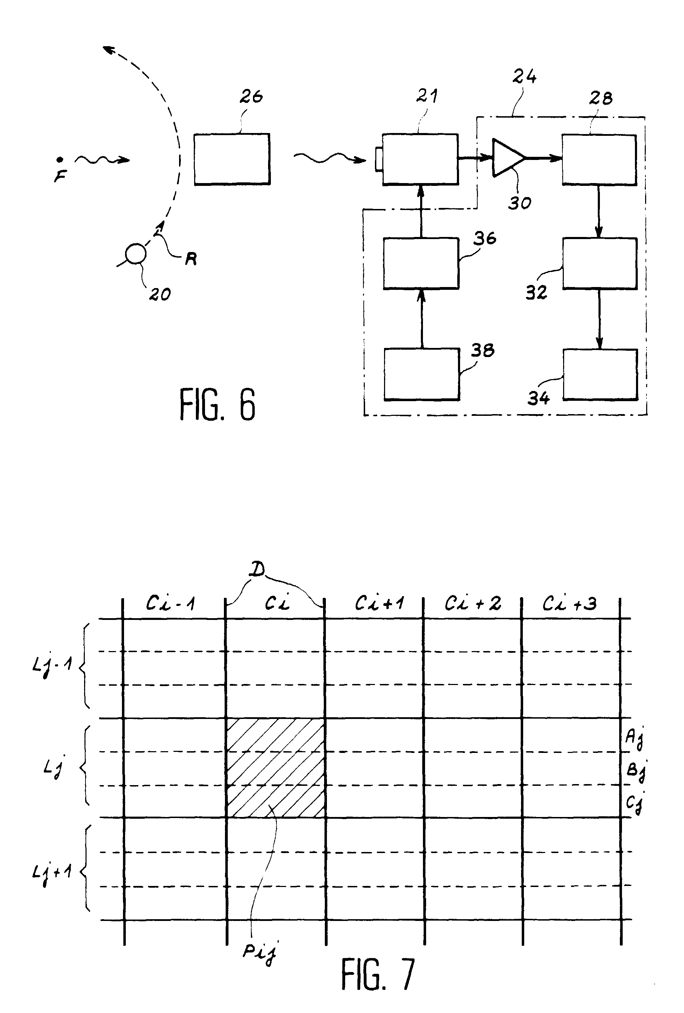

Comme on le voit sur la figure 6, à la place de l'ensemble constitué par l'écran de conversion 18 et des moyens optiques 22, on peut utiliser un tube IIR (Intensificateur d'Images Radiologiques), référencé 26, par exemple du genre de ceux qui sont commercialisés par la Société THOMSON-CSF.

Un tel tube 26 permet, comme l'ensemble constitué par l'écran 18 et les moyens optiques 22, d'envoyer sur la caméra 21 une image dans le spectre visible des objets 20 qui tournent autour du foyer F du générateur de rayonnement X.

Dans l'exemple représenté sur les figures 5 et 6, l'analyse des images est faite par la caméra 21 en 256x256 pixels et le balayage est réglé "non entrelacé".

Les moyens électroniques de traitement 24 comprennent un ensemble d'acquisition et d'intégration d'image à 256x256 pixels, comportant un convertisseur analogique-numérique 28 qui reçoit les signaux de sortie de la caméra 21 (par l'intermédiaire d'un amplificateur 30), une mémoire d'intégration 32 qui reçoit les signaux de sortie de ce convertisseur analogique-numérique 28 avec, pour l'adressage de cette mémoire 32, un compteur de lignes (non représenté) et une horloge (non représentée) pour le découpage des 256 pixels sur la ligne, avec un compteur de colonnes (non représenté).

Les moyens 24 comprennent également des moyens 34 destinés à traiter les informations contenues dans la mémoire 32 pour fournir les résultats de l'analyse.

On explique ci-après les modifications à apporter à la caméra ainsi qu'à la mémoire d'intégration.

En ce qui concerne la caméra 21, la tension en dents de scie appliquée sur les électrodes de déflexion verticale est modifiée pour adapter l'espacement des lignes à la vitesse de défilement de la projection des objets analysés.

Cette modification est faite par la sortie d'un convertisseur numérique-analogique 36 piloté par une mémoire 38 elle-même adressée par le compteur de lignes (non représenté).

Une analyse du flou sur les images obtenues lors de l'examen d'objets à bords nets permet, par modification des valeurs contenues dans la mémoire 38, d'optimiser ces valeurs pour les adapter au montage (grandissement optique en particulier et angle de sortie utilisé pour le générateur de rayonnement X).

En ce qui concerne les modifications de la mémoire d'intégration 32, on fait fonctionner cette dernière en mode défilement.

On note $Mi,j,n$ le contenu de cette mémoire d'intégration 32 relatif aux pixels de la colonne i de la ligne j après l'intégration de n trames.

Soit $Ai,j,n$ la valeur du signal relatif à la colonne i de la ligne j pour la trame n.

Pour un fonctionnement simple de la mémoire d'intégration, on peut écrire :

$$Mi,j,n+1 = Mi,j,n + Ai,j,n+1.$$

En fonctionnement en défilement ligne, on réalise l'égalité suivante :

$$Mi,j,n+1 = Mi,j-1,n + Ai,j,n+1.$$

Soit L le nombre de lignes du dispositif.

On retrouve, sur la dernière ligne de la mémoire d'intégration 32, le signal de sortie, au rythme d'une ligne de sortie par trame d'image d'analyse.

On acquiert ainsi une image intégrée de i colonnes et d'un nombre de lignes aussi grand que l'on veut puisqu'on sort une ligne par trame de l'image de départ.

Dans l'exemple représenté, avec acquisition vidéo non entrelacée et donc au rythme d'une image tout les 1/50 seconde, le dispositif fournit 50 lignes vidéo par seconde.

Cette image défilante est présentée sur un écran de télévision (non représenté) en mode défilement.

Pour un moniteur au standard 625 lignes, l'image met un peu plus de 10 secondes pour passer du haut au bas de l'écran et peut aisément être lue par un contrôleur.

On peut envisager une analyse automatique de cette image.

Des dispositifs d'analyse d'images défilantes sont faciles à réaliser

- soit directement sur l'image défilante si les traitement sont assez simples
- soit en découpant et en mémorisant l'image défilante à des instants convenablement choisis et en traitant ces morceaux d'image dans l'intervalle de temps qui sépare la prise de deux telles images figées.

Dans un autre mode de réalisation particulier du dispositif objet de l'invention, l'ensemble "caméra vidéo + dispositif d'acquisition et d'intégration numérique d'images" est remplacé par une caméra CCD matricielle à pas ajusté.

Il convient alors de bien adapter à la caméra CCD l'ensemble "générateur de rayonnement X + écran de conversion du rayonnement X en lumière visible + moyens optiques", en particulier du point de vue du grandissement de l'image, mais on a une plus grande souplesse sur la vitesse de défilement des objets, en ajustant la fréquence des horloges de commande de la caméra CCD.

On explique ci-après comment réaliser un détecteur matriciel à pas ajusté.

Sur la figure 7, on a représenté schématiquement et partiellement un détecteur matriciel à semiconducteur de type CCD.

Ce détecteur comporte des pixels qui sont répartis en lignes et en colonnes.

On voit sur la figure 7 les lignes Lj-1, Lj et Lj+1 et on voit aussi les colonnes Ci-1, Ci, Ci+1, Ci+2 et Ci+3.

On voit également le pixel Pij qui est à l'intersection de la colonne Ci et de la ligne Lj.

La séparation entre les colonnes est généralement faite par dopage : on réalise des canaux dopés, tels que les canaux D, pour la séparation des colonnes.

On crée ainsi des murs infranchissables pour les charges créées dans le substrat semiconducteur (silicium) sur lequel est réalisé le détecteur CCD.

Les lignes sont matérialisées par des électrodes transparentes qui créent, dans la tranche de silicium sous ces électrodes, lorsque ces dernières sont portées à un potentiel convenable, des zones de collection des charges créées.

Il y a plusieurs électrodes de ce type par ligne.

Dans l'exemple représenté sur la figure 7, il y a trois électrodes par ligne, qui portent les références Aj, Bj et Cj pour la ligne Lj.

Pour la lecture d'un tel détecteur, on décale progressivement les informations d'une ligne sur la suivante jusqu'à la dernière ligne où ces informations sont alors décalées successivement dans le sens des colonnes.

Les charges de tous les pixels parviennent ainsi successivement à un circuit de détection qui fournit un signal proportionnel aux charges reçues.

Ce signal est le "signal vidéo".

Pour obtenir un détecteur matriciel à pas ajusté, il suffit de réaliser des électrodes de ligne de largeurs adaptées à la vitesse de déplacement des projections radiographiques.

Ces variations de largeur étant faibles, les variations de capacités sont également faibles et les circuits de commande peuvent être identiques pour toute la matrice du détecteur.

Les masques de fabrication d'une matrice d'un détecteur CCD à pas ajusté sont obtenus facilement à partir de ceux d'une matrice à pixels réguliers en modifiant la largeur des électrodes de ligne.

Un exemple numérique de dimensions de pas est donné par le tableau I qui figure à la fin de la présente description.

Cette application numérique est calculée pour un angle de sortie du générateur de rayonnement X de ± 20° et pour un échantillonnage sur 128 pixels, soit 64 pixels de chaque côté de l'axe central (axe Z de la figure 5).

Il y a évidement une symétrie par rapport à cet axe et on a donc seulement considéré les angles de 0 à 20Y pour 64 pixels numérotés de 1 à 64.

Les valeurs données sont :

- dans la colonne A : le numéro de la frontière entre pixels (de 0 à 64) ; c'est aussi le numéro du pixel (de 1 à 64), le pixel n°i allant de la frontière i-1 à la frontière i,
- colonne B : angle de vue à la frontière du pixel (la variation angulaire, 0 à 20 degrés, est divisée en 64 pas identiques),
- colonne C : distance par rapport à l'origine de la frontière du pixel (c'est la longueur du déplacement, depuis le centre, de la projection du point d'un objet analysé, c'est-à-dire la tangente de l'angle précédent),
- colonne D : largeur de pixel (c'est le déplacement du point projeté, pour l'angle de vue considéré et pour une variation angulaire unitaire, ici 20Y/64 ; pour le pixel i, c'est la distance entre la frontière i-1 et la frontière i).

On précise que les valeurs de la distance donnée à la colonne C et de la largeur de pixel (colonne D) sont des valeurs relatives à un déplacement total du point projeté de 0,3639702 (128ème pixel).

Pour avoir les valeurs réelles, il faut multiplier ces coefficients par la longueur du déplacement d'un point sur le détecteur d'image.

Pour un déplacement du point projeté de 20 millimètres pour une variation angulaire de 0 à 20°, les valeurs des colonnes C et D du tableau I sont à multiplier par 20/0,3639702 pour avoir, en millimètres, les distances de déplacement et les largeurs des pixels.

La présente invention permet de radiographier des objets, même relativement épais, en défilement, en utilisant complètement dans l'espace et dans le temps le rayonnement X disponible à la sortie d'un générateur de rayonnement X.

On obtient ainsi la meilleure statistique possible sur les valeurs d'acquisition, pour une cadence donnée du défilement.

La présente invention est intéressante dans tous les cas où l'on veut examiner, à grande cadence, des pièces ayant une certaine épaisseur : le temps d'intégration pour chaque pièce étant court, on a intérêt à utiliser tous les photons X émis par le générateur.

C'est le cas, par exemple dans l'industrie alimentaire, du contrôle de récipients vides ou pleins.

Dans ce domaine, des récipients tels que les bouteilles de bière ou de jus de fruit ou les pots de yaourt ont des diamètres de 5 à 10 centimètres et les chaînes de remplissage fournissent jusqu'à quelques centaines, voire quelques milliers, de produits par minute.

Les industriels ont à contrôler ces produits pour en éliminer les éclats de verre et les objets métalliques par exemple.

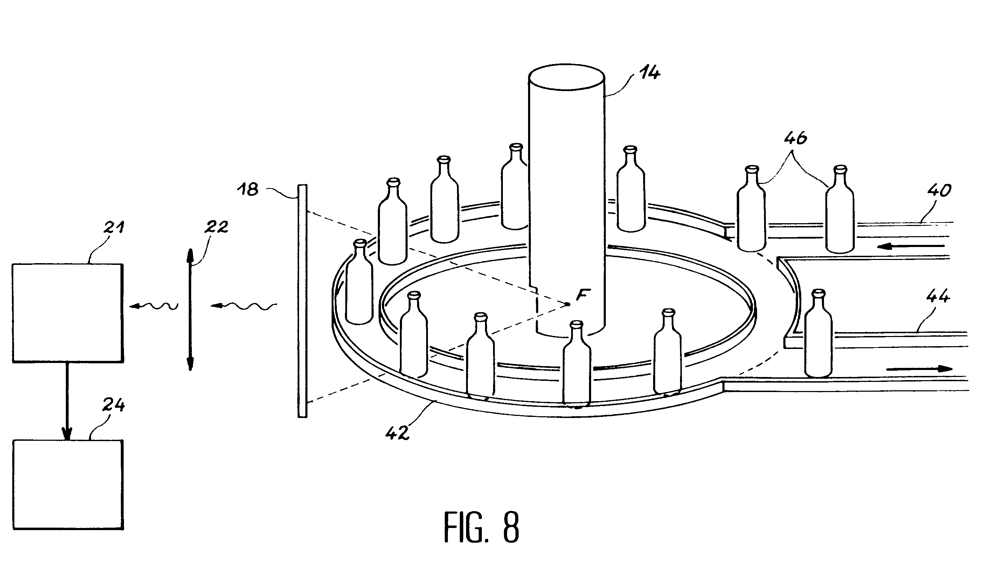

La figure 8 est une vue schématique d'un dispositif de contrôle de tels récipients, conformément à l'invention.

On retrouve sur la figure 8 le générateur 14 de rayonnement X, dont le foyer porte la référence F, l'écran de conversion 18, les moyens optiques 22, la caméra 21 et les moyens de traitement 24.

Le dispositif représenté sur la figure 8 comprend aussi un convoyeur linéaire d'entrée 40, un convoyeur circulaire 42 et un convoyeur de sortie 44.

Les récipients 46 à contrôler arrivent dans le dispositif par le convoyeur d'entrée 40, passent ensuite entre le générateur 14 et l'écran de conversion 18 (le convoyeur circulaire 42 est centré sur le foyer F du générateur 14) puis ces récipients quittent le dispositif par le convoyeur de sortie 44.

Les résultats du contrôle des récipients 46 sont fournis par les moyens de traitement 24.

Pour la clarté de la figure 8, les récipients 46 ont été représentés écartés les uns des autres mais, afin d'utiliser au mieux le rayonnement X, ces récipients 46 sont en réalité accolés les uns aux autres.

TABLEAU I

| A | B | C | D |
|---|---|---|---|
| N° Front | Angle de vue | Déplacement | Largeur pixel |
| 0 | 0,00 | 0,000000E+00 | - |
| 1 | 0,31 | 5,454208E-03 | 5,454208E-03 |
| 2 | 0,63 | 1,090874E-02 | 5,454533E-03 |
| 3 | 0,94 | 1,636392E-02 | 5,455182E-03 |
| 4 | 1,25 | 2,182008E-02 | 5,456155E-03 |
| 5 | 1,56 | 2,727753E-02 | 5,457454E-03 |
| 6 | 1,88 | 3,273661E-02 | 5,459078E-03 |
| 7 | 2,19 | 3,819764E-02 | 5,461028E-03 |
| 8 | 2,50 | 4,366094E-02 | 5,463304E-03 |
| 9 | 2,81 | 4,912685E-02 | 5,465907E-03 |
| 10 | 3,13 | 5,459569E-02 | 5,468837E-03 |
| 11 | 3,44 | 6,006778E-02 | 5,472095E-03 |
| 12 | 3,75 | 6,554346E-02 | 5,475681E-03 |
| 13 | 4,06 | 7,102306E-02 | 5,479598E-03 |
| 14 | 4,38 | 7,650691E-02 | 5,483845E-03 |
| 15 | 4,69 | 8,199533E-02 | 5,488423E-03 |
| 16 | 5,00 | 8,748866E-02 | 5,493335E-03 |
| 17 | 5,31 | 9,298724E-02 | 5,498580E-03 |
| 18 | 5,63 | 9,849140E-02 | 5,504160E-03 |
| 19 | 5,94 | 1,040015E-01 | 5,510077E-03 |
| 20 | 6,25 | 1,095178E-01 | 5,516332E-03 |
| 21 | 6,56 | 1,150407E-01 | 5,522926E-03 |

TABLEAU I   (suite)

| A | B | C | D |
|---|---|---|---|
| N° Front | Angle de vue | Déplacement | Largeur pixel |
| 22 | 6,88 | 1,205706E-01 | 5,529861E-03 |
| 23 | 7,19 | 1,261077E-01 | 5,537139E-03 |
| 24 | 7,50 | 1,316525E-01 | 5,544761E-03 |
| 25 | 7,81 | 1,372052E-01 | 5,552730E-03 |
| 26 | 8,13 | 1,427663E-01 | 5,561047E-03 |
| 27 | 8,44 | 1,483360E-01 | 5,569714E-03 |
| 28 | 8,75 | 1,539147E-01 | 5,578734E-03 |
| 29 | 9,06 | 1,595028E-01 | 5,588108E-03 |
| 30 | 9,38 | 1,651007E-01 | 5,597839E-03 |
| 31 | 9,69 | 1,707086E-01 | 5,607930E-03 |
| 32 | 10,00 | 1,763270E-01 | 5,618383E-03 |
| 33 | 10,31 | 1,819562E-01 | 5,629200E-03 |
| 34 | 10,63 | 1,875966E-01 | 5,640384E-03 |
| 35 | 10,94 | 1,932485E-01 | 5,651938E-03 |
| 36 | 11,25 | 1,989124E-01 | 5,663865E-03 |
| 37 | 11,56 | 2,045885E-01 | 5,676168E-03 |
| 38 | 11,88 | 2,102774E-01 | 5,688850E-03 |
| 39 | 12,19 | 2,159793E-01 | 5,701914E-03 |
| 40 | 12,50 | 2,216947E-01 | 5,715363E-03 |
| 41 | 12,81 | 2,274239E-01 | 5,729202E-03 |
| 42 | 13,13 | 2,331673E-01 | 5,743433E-03 |
| 43 | 13,44 | 2,389254E-01 | 5,758060E-03 |
| 44 | 13,75 | 2,446984E-01 | 5,773086E-03 |
| 45 | 14,06 | 2,504870E-01 | 5,788517E-03 |
| 46 | 14,38 | 2,562913E-01 | 5,804355E-03 |
| 47 | 14,69 | 2,621119E-01 | 5,820605E-03 |
| 48 | 15,00 | 2,679492E-01 | 5,837272E-03 |
| 49 | 15,31 | 2,738036E-01 | 5,854358E-03 |
| 50 | 15,63 | 2,796754E-01 | 5,871870E-03 |
| 51 | 15,94 | 2,855652E-01 | 5,889811E-03 |
| 52 | 16,25 | 2,914734E-01 | 5,908187E-03 |
| 53 | 16,56 | 2,974004E-01 | 5,927002E-03 |
| 54 | 16,88 | 3,033467E-01 | 5,946262E-03 |
| 55 | 17,19 | 3,093127E-01 | 5,965971E-03 |
| 56 | 17,50 | 3,152988E-01 | 5,986135E-03 |
| 57 | 17,81 | 3,213055E-01 | 6,006759E-03 |
| 58 | 18,13 | 3,273334E-01 | 6,027849E-03 |

TABLEAU I   (suite)

| A | B | C | D |
|---|---|---|---|
| N° Front | Angle de vue | Déplacement | Largeur pixel |
| 59 | 18,44 | 3,333828E-01 | 6,049941E-03 |
| 60 | 18,75 | 3,394543E-01 | 6,071451E-03 |
| 61 | 19,06 | 3,455482E-01 | 6,093975E-03 |
| 62 | 19,38 | 3,516652E-01 | 6,116989E-03 |
| 63 | 19,69 | 3,578057E-01 | 6,1405 E-03 |
| 64 | 20,00 | 3,639702E-01 | 6,1645 E-03 |

## Revendications

1. Procédé d'analyse radiographique d'objets en défilement, dans lequel on fait tourner les objets à analyser (20, 46) autour du foyer (F) d'un générateur (14) de rayons X, caractérisé en ce que le rayonnement X ayant traversé chaque objet est analysé par des moyens de détection (18, 22, 21; 26, 21) de type à intégration avec décalage dans lesquels le pas de décalage est adapté pour suivre constamment, avec la bonne phase, la projection de l'objet tournant sur les moyens de détection, ces moyens de détection comprenant un détecteur qui est échantillonné selon un pas constamment proportionnel à $1/\cos^2 \theta$, où $\theta$ représente l'angle d'examen de l'objet.

2. Dispositif d'analyse radiographique d'objets en défilement, ce dispositif comprenant :

   - un générateur (14) de rayons X, et
   - des moyens de rotation prévus pour faire tourner les objets à analyser (20, 46) autour du foyer (F) d'un générateur (14) de rayons X,

   caractérisé en ce qu'il comprend en outre des moyens de détection (18,22, 21; 26, 21) de type à intégration avec décalage, qui sont prévus pour analyser le rayonnement X ayant traversé chaque objet et dans lesquels le pas de décalage est adapté pour suivre constamment, avec la bonne phase, la projection de l'objet tournant sur les moyens de détection, ces moyens de détection comprenant un détecteur qui est échantillonné selon un pas constamment proportionnel à $1/\cos^2 \theta$, où $\theta$ représente l'angle d'examen de l'objet.

3. Dispositif selon la revendication 2, caractérisé en ce que les moyens de détection comprennent en outre des moyens (18, 26) de conversion de ce rayonnement X ayant traversé l'objet (20, 46) en une image du spectre visible, et le détecteur est un détecteur matriciel sur lequel est projetée cette image visible de l'objet et dont le pas est ajusté proportionnellement à $1/\cos^2\theta$, où $\theta$ représente l'angle d'examen de l'objet.

4. Dispositif selon la revendication 2, caractérisé en ce que les moyens de détection comprennent en outre des moyens (18, 26) de conversion de ce rayonnement X ayant traversé l'objet (20, 46) en une image du spectre visible, et le détecteur est un détecteur vidicon (21) qui est muni d'une mémoire d'intégration (32) et sur lequel est projetée cette image visible de l'objet,
   en ce que la vitesse de balayage des lignes ou des colonnes du détecteur vidicon est modulée proportionnellement à $1/\cos^2\theta$, où $\theta$ représente l'angle d'examen de l'objet, et en ce que les images successivement formées sont intégrées dans la mémoire (32), cette dernière étant explorée en mode défilement.

## Patentansprüche

1. Verfahren zur radiographischen Analyse von sich bewegenden Objekten, bei dem man die zu analysierenden Objekte (20, 46) den Brennpunkt (F) eines Röntgenstrahlenerzeugers bzw. einer Röntgenröhre (14) umrunden läßt,
   **dadurch gekennzeichnet,**
   daß die Röntgenstrahlung, nachdem sie jedes Objekt durchquert hat, analysiert wird durch Detektionseinrichtungen (18, 22, 21; 26, 21) des Integrationstyps mit Verschiebung, bei denen der Verschiebungsschritt bzw. die Verschiebungsteilung angepaßt ist, um konstant mit der richtigen Phase die Projektion des umrundenden Objekts auf den Detektionseinrichtungen zu verfolgen, wobei diese Detektionseinrichtungen einen Detektor umfassen, der entsprechend einer Teilung abgetastet wird, die konstant proportional ist zu $1/\cos^2\Theta$, wobei $\Theta$ den Prüfungswinkel des Objekts darstellt.

2. Vorrichtung zur radiographischen Analyse von sich bewegenden Objekten, wobei diese Vorrichtung umfaßt:

- einen Röntgenstrahlenerzeuger bzw. eine Röntgenröhre (14) und
- Rotationseinrichtungen, vorgesehen um die zu analysierenden Objekte (20, 46) den Brennpunkt (F) einer Röntgenröhre (14) umrunden zu lassen,

**dadurch gekennzeichnet,** daß sie außerdem Detektionseinrichtungen (18, 22, 21; 26, 21) des Integrationstyps mit Verschiebung umfaßt, die dazu vorgesehen sind, die Röntgenstrahlung, nachdem sie jedes Objekt durchquert hat, zu analysieren, und bei denen der Verschiebungsschritt bzw. die Verschiebungsteilung angepaßt ist, um konstant mit der richtigen Phase die Projektion des umrundenden Objekts auf den Detektionseinrichtungen zu verfolgen, wobei diese Detektionseinrichtungen einen Detektor umfassen, der entsprechend einer Teilung abgetastet wird, die konstant proportional ist zu $1/\cos^2\Theta$, wobei $\Theta$ den Prüfungswinkel des Objekts darstellt.

3. Vorrichtung nach Anspruch 2, dadurch gekennzeichnet, daß die Detektionseinrichtungen außerdem Einrichtungen (18, 26) zur Umsetzung bzw. Umwandlung dieser Röntgenstrahlung nach dem Durchqueren des Objekts (20, 46) in ein Bild des sichtbaren Spektrums umfassen und der Detektor ein Matrix-Detektor ist, auf den dieses sichtbare Bild des Objekts projiziert wird und dessen Teilung proportional an $1/\cos^2\Theta$ angepaßt ist, wo $\Theta$ den Prüfungswinkel des Objekts darstellt.

4. Vorrichtung nach Anspruch 2, dadurch gekennzeichnet, daß die Detektionseinrichtungen außerdem Einrichtungen (18, 26) zur Umsetzung bzw. Umwandlung dieser Röntgenstrahlung nach dem Durchqueren des Objekts (20, 46) in ein Bild des sichtbaren Spektrums umfassen und der Detektor ein Vidicon-Detektor ist, auf den dieses sichtbare Bild des Objekts projiziert wird,

und dadurch, daß die Abtastgeschwindigkeit der Zeilen oder der Spalten des Vidicon-Detektors proportional zu $l/\cos^2\Theta$ moduliert wird, wobei $\Theta$ den Prüfungswinkel des Objekts darstellt,
und dadurch, daß die sukzessive hergestellten Bilder in den Speicher (32) eingelesen werden, wobei dieser letztere kontinuierlich abgefragt wird.

## Claims

1. Process for the radiographic analysis of scrolling objects, in which the objects to be analysed (20, 46) are made to rotate about the focus (F) of an X-ray generator (14), characterized in that the X-radiation having crossed each object is analysed by detection means (18, 22, 21; 26, 21) of the offset and integration type in which the offset interval is adapted so as permanently to follow, with the correct phase, the projection of the rotating object on the detection means, these detection means comprising a detector which is sampled according to an interval permanently proportional to $1/\cos^2\theta$, where $\theta$ represents the angle of examination of the object.

2. Device for the radiographic analysis of scrolling objects, this device comprising:

- an X-ray generator (14), and
- means of rotation provided so as to rotate the objects to be analysed (20, 46)about the focus (F) of an X-ray generator (14),

characterized in that it further comprises detection means (18, 22, 21; 26, 21) of the offset and integration type, which are provided in order to analyse the X-radiation having crossed each object and in which means the offset interval is adapted so as permanently to follow, with the correct phase, the projection of the rotating object on the detection means, these detection means comprising a detector which is sampled according to an interval permanently proportional to $1/\cos^2\theta$, where $\theta$ represents the angle of examination of the object.

3. Device according to Claim 2, characterized in that the detection means further comprise means (18, 26) for converting this X-radiation having crossed the object (20, 46) into an image of the visible spectrum, and the detector is a matrix detector onto which this visible image of the object is projected and whose interval is set in proportion to $1/\cos^2\theta$, where $\theta$ represents the angle of examination of the object.

4. Device according to Claim 2, characterized in that the detection means further comprise means (18, 26) for converting this X-radiation having crossed the object (20, 46) into an image of the visible spectrum, and the detector is a vidicon detector (21) which is equipped with an integration memory (32) and onto which this visible image of the object is projected,

in that the rate of scanning of the rows or columns of the vidicon detector is modulated in proportion to $1/\cos^2\theta$, where $\theta$ represents the angle of examination of the object, and in that the successively formed images are integrated in the memory (32), the latter being explored in scroll mode.

FIG. 1

FIG. 2

_A_

_B_

_C_

FIG. 3

FIG. 4

FIG. 5

FIG. 6

FIG. 7

FIG. 8